# EUROPEAN PATENT APPLICATION

(11) **EP 1 202 534 A1**
(43) Date of publication of application: **02.05.2002**
(21) Application number: 01600019.2
(22) Date of filing: 13.09.2001
(51) Int. Cl.: H04M 1/05

(54) **Headset for mobile telephones, comprising of thin elastic tubes and mechanical sound collectors (without electronic means)**

(30) Priority: 31.10.2000 GR 2000100380
(71) Applicant: Triantaphillis Cristos & Son "Olympic Shoe Machinery", 177 78 Tavros, Atiiki (GR)
(72) Inventor: Triantafyllis, Christos, 177 78 Travros, Attiki (GR); Triantafyllis, Nokolaos, 177 78 Travros, Attiki (GR)

(57) **Abstract**

Mechanical sound collector for mobile telephony devices which collects and transfers sound by physical propagation through two suitable tubes. It consists of two thin elastic tubes (08) and (09) when it is in one piece Drawing 2 or by four when it is divided (04), (05), (08) and (09). At the edges of the tubes there have been adapted the sound collectors (03) (10) (12) and (17). The mechanical collector is placed at the device of the mobile telephony from one side, while from the other to our ear and lips. The mechanical sound collector does not transfer any radiation because the sound propagation is carried out by physical propagation through the two thin tubes.

## Description

The invention refers to a system of mechanical transmission of sound from and to the mobile telephony devices. It is based on the sound transmission through thin tubes, at the edges of which there is a sound collector of conical, cylindrical or other suitable shape.

All the mobile telephony devices during their operation emit high frequency electro-magnetic radiation which is dangerous for human organism. The manufacturing companies have created a microphone and earphone system names HANDS FREE which provides the ability to move the telephone away from our face, this having as a result the percentage of radiation we receive to be reduced.

This system consists of the microphone, the earphone and the plug. As it is well known the radiation being emitted by the mobile is transferred again in the area of our brain but with smaller intense. This system is highly widespread and it is being produced almost by all the companies which manufacture mobile telephones.
For example NOKIA, ERICSSON, SIEMENS, MOTOROLA etc.

The disadvantage in all mobile telephones in general is the high frequency radiation being emitted and the possible consequences to human organism.
In case of using a HANDS FREE electronic system only a partial reduction of the radiation being emitted results.

The present invention has as its purpose to create a mechanical HANDS FREE system (I.e. a system of a mechanical sound carrier) which collects and carries the sound by physical transmission through two proper tubes, so that its construction and adaptation to each mobile telephony device to be simple.

In accordance with the invention this is being achieved by the creation of a new mechanical carrier which propagates the sound by physical duction through two elastic small tubes at the edges of which there are respectively two proper transmitters and collectors.

The form of the collectors and the transmitters may be cylindrical, conical etc. They are being respectively adapted from the one edge to the mobile telephone's microphone and earphone and, from the other side, the transmitter ends at the ear and the collector at our lips.

A mechanical sound collector for mobile telephone devices with the assistance of thin elastic tubes and sound collectors in accordance with this invention, presents many advantages. The sound transmission is carried out mechanically with physical propagation through two elastic tubes, this having as a result the complete isolation of the mobile telephony device from the person who speaks, so that the radiation to be drawn away and to be limited in the area of the device's antenna.

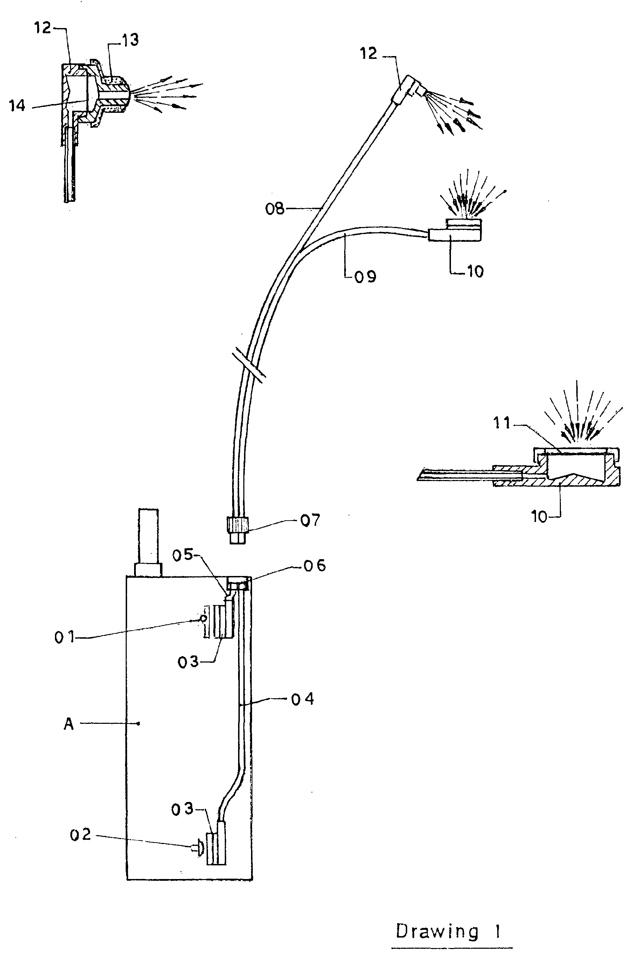

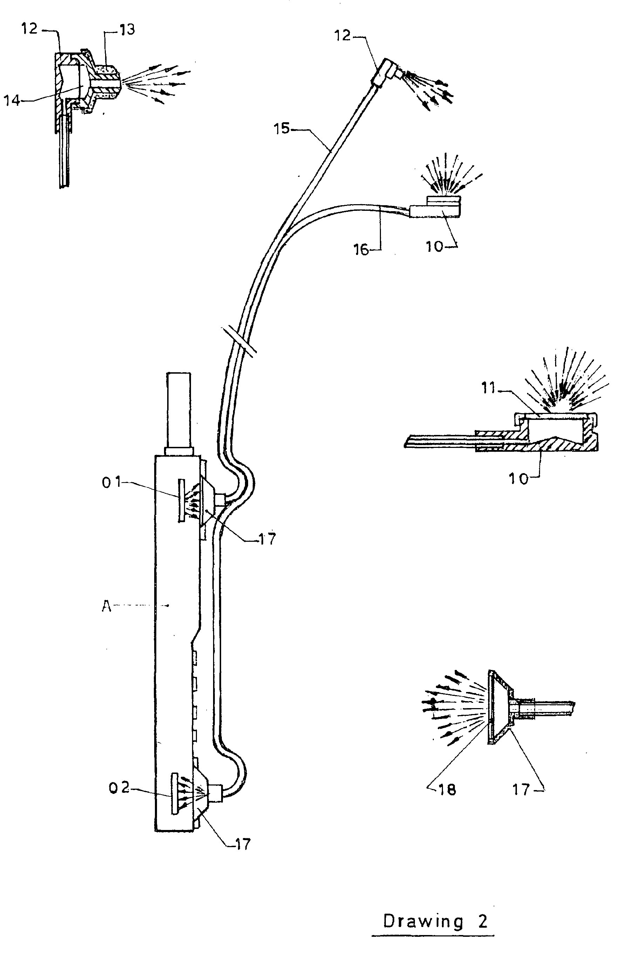

The sound collector may be except of divided (**Drawing 1**) to be also in one piece **(Drawing 2).** It may be also used in many applications under adverse environmental conditions (Moisture, dust, temperature) as well as it may be used in navigation, in mines, in military applications etc.

The invention is described below with the assistance of an example and with reference to the attached drawings.

**Drawing 1** shows a general layout of a divided sound collector which is placed at a mobile telephony device.

**Drawing 2** shows a general layout of a one piece sound collector placed at a mobile telephony device.

In **Drawing 1** we see (A) which is a mobile telephony device, (01) is the mobile phone's earphone, (02) is the mobile phone's microphone, (03) is the sound collectors, (04) and (05) are thin elastic tubes or made by any other suitable material. (06) is a feminine plug which connects the pipes (04) and (05). (07) is a masculine plug which buckles to (06). (08) and (09) are two thin elastic tubes through which the sound passes. (10) is the sound collector, (11) is the collector's membrane, (12) is the earphone which is placed in our ear, (13) is a spumous material in order no injury to occur in our ear. (14) is a membrane which in many cases is optional.
Drawing 2 shows us the general layout of a one piece mechanical sound collector. (A) is the mobile telephony device, (01) is the mobile phone's earphone, (02) is the mobile phone's microphone, (17) are the conical sound collectors which may be cylindrical as well. (18) is the collector's membrane, (15) and (16) are the thin elastic tubes through which the sound passes. (10), (11), (12), (13) and (14) are like in **Drawing 1.**

## Claims

1. Mechanical sound collector for mobile telephony devices which comprises thin elastic tubes (04) and (05), at the edges of which a sound collector is being adapted to each one (03) and at the other they end at a masculine plug (06). It also comprises the thin tubes (08) and (09), the masculine plug (07) which may buckle to (06). At the other end there are being adapted one sound collector (10) and one transmitter (12).

2. Mechanical sound collector in accordance with claim 1 which is **characterized by** the fact that beside that it is divided it may also be in one piece. It comprises the tubes (15) and (16) at the edges of which towards the side of the mobile phone they have by one sound collector (17) and at their other edge are the sound collector (10) and the transmitter (12).

3. Mechanical sound collector in accordance with claims 1 and 2 which may be used in many applications under adverse environmental conditions, Moisture, Temperature, dust etc. Such as, for example, navigation, mines, military applications.
